# EUROPEAN PATENT APPLICATION

(11) **EP 3 505 565 A1**
(43) Date of publication of application: **03.07.2019**
(21) Application number: 17843640.8
(22) Date of filing: 23.08.2017
(51) Int. Cl.: C08L 23/08, C08L 101/00

(54) **RESIN MODIFIER AND METHOD FOR PRODUCING SAME**

(30) Priority: 23.08.2016 JP 2016162759
(71) Applicant: SUMITOMO CHEMICAL COMPANY, LIMITED, Chuo-ku Tokyo 104-8260 (JP)
(72) Inventor: OKADA Mitsuhiro, Ichihara-shi Chiba 299-0195 (JP)
(74) Representative: Vossius & Partner Patentanwälte Rechtsanwälte mbB
(86) International application number: PCT/JP2017/030137
(87) International publication number: WO 2018/038162

(57) **Abstract**

Disclosed is a resin modifier containing a polymer comprising a monomer unit having an epoxy group. In a ¹³C NMR spectrum of the polymer measured in deuterated orthodichlorobenzene to which tetramethylsilane is added, a signal X₁ at a chemical shift of 69.4 ± 0.5 ppm and a signal X₂ at a chemical shift of 75.1 ± 0.5 ppm are observed when a chemical shift of a signal attributed to tetramethylsilane is taken as 0 ppm.

## Description

### Technical Field

The present invention relates to a resin modifier and a method for producing the same.

### Background Art

In order to improve various kinds of properties such as impact resistance and molding processability of various kinds of resins having reactive active hydrogen groups such as a carboxyl group, a compound having an epoxy group is used as a resin modifier in some cases. For example, Patent Literatures 1 and 2 disclose a combination of a polyester resin with a low molecular weight having a carboxyl group and a compound having an epoxy group as a binder, in which a metal salt of a carboxylic acid is used as a catalyst for the reaction between the carboxyl group and the epoxy group. In addition, Patent Literature 3 discloses a combination of a polyarylene sulfide resin having a carboxyl group and an epoxy silane coupling agent, in which improvement in the impact resistance of a molded product is achieved by enhancing the reactivity between the polyarylene sulfide resin and the epoxy silane coupling agent.

### Citation List

### Patent Literature

Patent Literature 1: International Application Publication No. 01/094443
Patent Literature 2: Japanese Unexamined Patent Application Publication No. 2004-155968
Patent Literature 3: Japanese Unexamined Patent Application Publication No. 2008-247955

### Summary of Invention

### Technical Problem

With regard to a resin modifier having an epoxy group, it is often desirable that the reactivity of the epoxy group is high in order to enhance the effect of improving the properties of resin. Accordingly, an object of the present invention is to enhance the reactivity of a resin modifier having an epoxy group with an active hydrogen group.

### Solution to Problem

The present inventors have found out that the presence or absence of a signal observed at a specific chemical shift correlates with the reactivity of an epoxy group with regard to a resin modifier containing a polymer having an epoxy group, and have completed the present invention based on this finding.

Accordingly, an aspect of the present invention provides a resin modifier containing a polymer containing a monomer unit having an epoxy group. In a ¹³C NMR spectrum of the polymer measured in deuterated orthodichlorobenzene to which tetramethylsilane is added, a signal at a chemical shift of 69.4 ± 0.5 ppm and a signal at a chemical shift of 75.1 ± 0.5 ppm are observed when a chemical shift of a signal attributed to tetramethylsilane is taken as 0 ppm.

Another aspect of the present invention provides a method for producing the resin modifier described above, which includes singly heating a polymer containing a monomer unit having an epoxy group to 220°C or more. According to this method, it is possible to easily obtain a polymer having the specific chemical shifts described above.

Still another aspect of the present invention provides a resin composition containing the resin modifier described above and a resin having an active hydrogen group.

### Advantageous Effects of Invention

According to the present invention, there is provided a resin modifier containing a polymer having an epoxy group exhibiting enhanced reactivity.

### Brief Description of Drawings

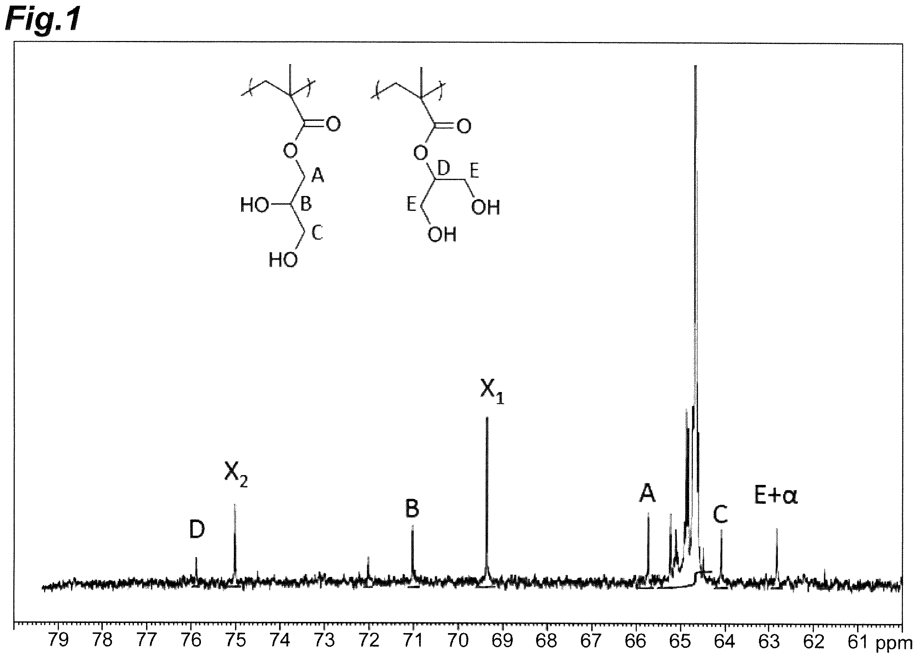

FIG. 1 is a ¹³C NMR spectrum of a kneaded material of an ethylene-glycidyl methacrylate copolymer.

### Description of Embodiments

Hereinafter, some embodiments of the present invention will be described in detail. However, the present invention is not limited to the following embodiments.

The resin modifier according to an embodiment contains a polymer containing one kind or two or more kinds of monomer units having an epoxy group (hereinafter referred to as the "epoxy group-containing polymer" in some cases). The monomer from which the monomer unit having an epoxy group is derived may be a compound having an epoxy group and a polymerizable unsaturated group, for example, an unsaturated carboxylic acid glycidyl ester or a glycidyl ether having an unsaturated group.

The unsaturated carboxylic acid glycidyl ester may be a compound represented by the following Formula (1). In Formula (1), R¹ represents an alkenyl group which has from 2 to 18 carbon atoms and may have one or more substituents. Examples of the compound represented by Formula (1) include glycidyl acrylate, glycidyl methacrylate, and itaconic acid glycidyl ester.

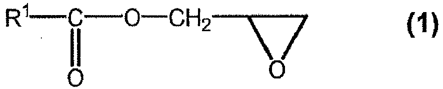

The glycidyl ether having an unsaturated group may be a compound represented by the following Formula (2). In Formula (2), R² represents an alkenyl group which has from 2 to 18 carbon atoms and may have one or more substituents and X represents CH₂-O (CH₂ is bonded to R₂) or an oxygen atom. Examples of the compound represented by Formula (2) include allyl glycidyl ether, 2-methylallyl glycidyl ether, and styrene-p-glycidyl ether.

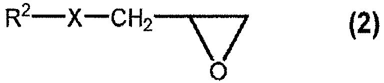

The proportion of the monomer unit having an epoxy group in the epoxy group-containing polymer may be 0.1% by mass or more, 0.5% by mass or more, 1% by mass or more, 3% by mass or more, or 10% by mass or more based on the mass of the epoxy group-containing polymer. There is a tendency that a particularly remarkable effect on the improvement in reactivity of the epoxy group is obtained when the proportion of the monomer unit having an epoxy group is high. The upper limit of the proportion of the monomer unit having an epoxy group is not particularly limited, but for example, it may be 50% by mass or less, 30% by mass or less, or 20% by mass or less.

The epoxy group-containing polymer may be a thermoplastic resin, or may be an olefin copolymer containing a monomer unit having an epoxy group and a monomer unit derived from ethylene or an α-olefin (propylene or the like). The proportion of the monomer unit derived from ethylene or an α-olefin (the proportion of the sum of a monomer unit derived from ethylene and a monomer unit derived from an α-olefin) may be from 50% to 99.9% by mass based on the mass of the epoxy group-containing polymer.

The olefin copolymer as the epoxy group-containing polymer may further contain other monomer units derived from ethylenically unsaturated compounds in addition to the monomer unit having an epoxy group and the monomer unit derived from ethylene or an α-olefin. The proportion of the other monomer units may be from 0% to 50% by mass or from 10% to 40% by mass based on the mass of the epoxy group-containing polymer.

Examples of the ethylenically unsaturated compounds from which the other monomer units are derived include α,β-unsaturated carboxylic acid alkyl esters such as methyl (meth)acrylate, ethyl (meth)acrylate, propyl (meth)acrylate, and butyl (meth)acrylate, carboxylic acid vinyl esters such as vinyl acetate, vinyl propionate, and vinyl butanoate, vinyl ethers such as methyl vinyl ether, ethyl vinyl ether, propyl vinyl ether, and phenyl vinyl ether, styrene, and styrene derivatives such as methylstyrene and ethylstyrene. The term "(meth)acrylate" means an acrylate or a methacrylate. This also applies to similar compounds.

Specific examples of the epoxy group-containing polymer include an ethylene-glycidyl (meth)acrylate copolymer, an ethylene-glycidyl (meth)acrylate-methyl (meth)acrylate copolymer, an ethylene-glycidyl (meth)acrylate-ethyl (meth)acrylate copolymer, an ethylene-glycidyl (meth)acrylate-normal propyl (meth)acrylate copolymer, an ethylene-glycidyl (meth)acrylate-isopropyl (meth)acrylate copolymer, an ethylene-glycidyl (meth)acrylate-normal butyl (meth)acrylate copolymer, an ethylene-glycidyl (meth)acrylate-isobutyl (meth)acrylate copolymer, and an ethylene-glycidyl (meth)acrylate-vinyl acetate copolymer. Particularly, an ethylene-glycidyl (meth)acrylate copolymer may be selected.

When the ¹³C NMR spectrum of the epoxy group-containing polymer according to an embodiment is measured in deuterated orthodichlorobenzene to which tetramethylsilane is added, a signal at a chemical shift of 69.4 ± 0.5 ppm (hereinafter referred to as the "signal X₁" in some cases) and a signal at a chemical shift of 75.1 ± 0.5 ppm (hereinafter referred to as the "signal X₂" in some cases) are observed. The values of these chemical shifts are determined by taking the chemical shift of the signal attributed to tetramethylsilane as 0 ppm. The ¹³C NMR spectrum can be measured, for example, at 135°C. The chemical structure to which the signal X₁ and the signal X₂ are attributed is not clear, but the presence or absence of the chemical structure to which these signals are attributed greatly affects the reactivity of the epoxy group in the epoxy group-containing polymer according to the findings by the present inventors. The amount of tetramethylsilane added to deuterated orthodichlorobenzene for the measurement of ¹³C NMR spectrum may be within a usual range so that appropriate measurement can be conducted, and for example, it may be from 0.01% to 0.5% by mass based on the mass of deuterated orthodichlorobenzene.

In the present specification, the phrase that "the signal X₁ and the signal X₂ are observed" means that the integrated values of the signal X₁ and the signal X₂ are 0.5 or more, respectively, when the integrated value of the signal attributed to the monomer unit having an epoxy group is taken as 100. The upper limit of the integrated values of the signal X₁ and the signal X₂ is not particularly limited, but for example, it is 15 or less when the integrated value of the signal attributed to the monomer unit having an epoxy group is taken as 100.

The epoxy group-containing polymer from which the signal X₁ and the signal X₂ are attributed can be easily obtained by, for example, a method including singly heating the epoxy group-containing polymer. The heating conditions can be adjusted so that the signal X₁ and the signal X₂ are observed from the epoxy group-containing polymer after being heated. Specifically, the temperature for heating may be 220°C or more or 250°C or more and may be 400°C or less or 350°C or less. The time for heating may be, for example, from 1 to 30 minutes or from 3 to 10 minutes. The epoxy group-containing polymer may be heated by being melt-kneaded at a predetermined temperature. Here, the phrase "to singly heat the epoxy group-containing polymer" also includes heating of a mixture containing the epoxy group-containing polymer as a main component and other components in trace amounts in addition to heating only of the epoxy group-containing polymer. The proportion of the epoxy group-containing polymer as a main component is, for example, from 80% to 100% by mass, from 90% to 100% by mass, from 95% to 100% by mass, or from 99% to 100% by mass based on the mass of the mixture to be heated.

The resin modifier according to an embodiment contains the epoxy group-containing polymer as a main component but can also contain other components such as a metal compound in trace amounts. However, the proportion of the epoxy group-containing polymer in the resin modifier may be 80% by mass or more, 90% by mass or more, 95% by mass or more, or 99% by mass or more based on the mass of the resin modifier. The upper limit value of the proportion of the epoxy group-containing polymer is 100% by mass.

The resin modifier according to an embodiment can be used for modifying a resin having an active hydrogen group (hereinafter referred to as the "resin to be modified" in some cases). The resin modifier is used, for example, in order to obtain a resin composition which contains one or more kinds of resins to be modified and the resin modifier and in which at least a part of the epoxy group-containing polymer in the resin modifier is bonded by the reaction between the epoxy group and the active hydrogen group in the resin to be modified. This resin composition modified can exhibit improved properties in terms of impact resistance, chemical resistance, weather resistance, hydrolysis resistance, heat shock resistance, and the like as compared with the case of only the resin to be modified.

The resin to be modified which is to be combined with the resin modifier is typically a thermoplastic resin, and the active hydrogen group is often a side chain group or a terminal group in the thermoplastic resin. The active hydrogen group can be, for example, at least one kind selected from the group consisting of a carboxyl group, an amino group, and a hydroxyl group. The resin to be modified can be at least one kind of thermoplastic resin selected from aliphatic polyesters (polylactic acid, polycaprolactam, and the like), aromatic polyesters (polyethylene terephthalate, polybutylene terephthalate, polyethylene naphthalate, and the like), polyphenylene ether, polyphenylene sulfides, polycarbonates, polyether sulfones, polyamides, polyphthalamide, polyester amides, polyketones, polyether ketones, polyether ether ketone, polyacetals, polysulfones, liquid crystal polymers (liquid crystal polyesters, liquid crystal polyester amides, liquid crystal polycarbonates, and the like), or the like.

The content of the epoxy group-containing polymer in the resin composition modified may be from 1 to 40 parts by mass, from 1 to 30 parts by mass, or from 1 to 20 parts by mass with respect to 100 parts by mass of the resin to be modified from the viewpoint of enhancing the modification effect by the resin modifier. The content of the sum of the resin to be modified and the resin modifier in the resin composition modified may be 40% by mass or more, 50% by mass or more, 60% by mass or more, 70% by mass or more, or 80% by mass or more based on the mass of the resin composition.

The resin composition modified can further contain a filler. A filler is used mainly for improving the rigidity, hardness, and the like of the molded article. Examples of the filler include calcium carbonate, magnesium carbonate, aluminum hydroxide, magnesium hydroxide, zinc oxide, titanium oxide, magnesium oxide, aluminum oxide, aluminum silicate, magnesium silicate, calcium silicate, silicic acid, hydrated calcium silicate, hydrated aluminum silicate, mica, a mineral fiber, xonotlite, a potassium titanate whisker, an aluminum borate whisker, wollastonite, magnesium oxysulfate, a glass balloon, an inorganic fiber (a glass fiber, a glass flake, a glass bead, a carbon fiber, a stainless steel fiber, or the like), an aramid fiber, and carbon black. The content of the filler is, for example, from 1 to 200 parts by mass, from 5 to 150 parts by mass, or from 10 to 100 parts by mass with respect to 100 parts by mass of the resin to be modified.

The resin composition modified can contain antioxidants such as hindered phenolic, phosphorus-based, and sulfur-based antioxidants and one or more kinds of ordinary additives such as a heat stabilizer, an ultraviolet absorber (for example, resorcinol, salicylate, benzotriazole, or benzophenone), an anti-coloring agent (a phosphite, a hypophosphite, or the like), a plasticizer, a flame retardant, a release agent, an antistatic agent, and a coloring agent containing a dye/pigment (cadmium sulfide, phthalocyanine, or the like).

The resin composition modified can be obtained, for example, by a method including kneading the resin to be modified, the resin modifier, and, if necessary, other components.

In a case in which the resin composition modified is a thermoplastic resin composition, a molded article of the thermoplastic resin composition can be obtained by molding this by an arbitrary molding method such as an injection molding method, an extrusion molding method, a vacuum molding method, or a hollow molding method. The molded article of the thermoplastic resin composition can exhibit superior mechanical properties in terms of impact resistance and the like as compared with the case of only a thermoplastic resin as the resin to be modified.

### Examples

Hereinafter, the present invention will be described more specifically with reference to Examples. However, the present invention is not limited to these Examples.

### Example

An ethylene-glycidyl methacrylate copolymer (BONDFAST E manufactured by SUMITOMO CHEMICAL CO., LTD., ethylene/glycidyl methacrylate (mass ratio) = 88/12, containing aluminum oxide in a trace amount) was kneaded under the conditions of a rotational speed of 80 rpm, 250°C, and 5 minutes by using a laboplast mill (30C 150R 100 H manufactured by TOYO SEIKI CO., LTD.) to obtain a kneaded material of copolymer.

The kneaded material obtained was dissolved in deuterated orthodichlorobenzene to which tetramethylsilane was added, and the ¹³C NMR spectrum of the kneaded material was measured at 135°C using the solution obtained. FIG. 1 is the ¹³C NMR spectrum of the kneaded material. In addition to the signal at a chemical shift of from 64.5 to 65.5 ppm attributed to the glycidyl methacrylate unit, a signal (signal X₁) at a chemical shift of 69.4 ± 0.5 ppm and a signal (signal X₂) at a chemical shift of 75.1 ± 0.5 ppm were also observed. The chemical shift of the signal attributed to tetramethylsilane was taken as 0 ppm and the chemical shift of each signal was determined based on this. The integrated value of the signal X₁ was 3.75 and the integrated value of the signal X₂ was 1.54 when the integrated value of the signal of the chemical shift of from 64.5 to 65.5 ppm attributed to glycidyl methacrylate was taken as 100.

By using the same laboplast mill as the above, 17 parts by mass of the kneaded material of Example 1 as a resin modifier and 83 parts by mass of polylactic acid (TERRAMAC TE2000C manufactured by UNITIKA LTD.) were melt-kneaded under the conditions of a rotational speed of 80 rpm, 190°C, and 5 minutes to obtain a resin composition modified with the kneaded material. The fluidity of the resin composition obtained was 2.4 g/10 min when being measured at 190°C and 21.2 N by using a melt indexer.

### Comparative Example

The ¹³C NMR spectrum of the same ethylene-glycidyl methacrylate copolymer (BONDFAST E manufactured by SUMITOMO CHEMICAL CO., LTD.) as in Example before being kneaded was measured in deuterated orthodichlorobenzene to which tetramethylsilane was added at 135°C. In the ¹³C NMR spectrum obtained, both of the signals at the chemical shifts of 69.4 ± 0.5 ppm and 75.1 ± 0.5 ppm were not observed.

A resin composition modified was obtained in the same manner as in Example except that the copolymer before being kneaded was used as a modifier as it was. The fluidity of the resin composition obtained was 4.7 g/10 min when being measured at 190°C and 21.2 N by using a melt indexer.

### Conclusion

From the above evaluation results, it can be seen that the resin composition modified with a kneaded material containing an epoxy group-containing polymer from which the signals X₁ and X₂ are attributed exhibits lower fluidity as compared with the resin composition of Comparative Example modified with a copolymer unkneaded. The low fluidity means high reactivity of the epoxy group in the ethylene-glycidyl methacrylate copolymer as a modifier. In other words, it has been confirmed that it is possible to enhance the reactivity of the epoxy group in the epoxy group-containing polymer by paying attention to the presence of the signals X₁ and X₂.

## Claims

1. A resin modifier comprising a polymer containing a monomer unit having an epoxy group, wherein a signal at a chemical shift of 69.4 + 0.5 ppm and a signal at a chemical shift of 75.1 ± 0.5 ppm are observed when a chemical shift of a signal attributed to tetramethylsilane is taken as 0 ppm in a ¹³C NMR spectrum of the polymer measured in deuterated orthodichlorobenzene to which tetramethylsilane is added.

2. The resin modifier according to claim 1, wherein a proportion of the monomer unit having an epoxy group in the polymer is 10% by mass or more based on a mass of the polymer.

3. The resin modifier according to claim 1 or 2, wherein the resin modifier is used for modifying a resin having an active hydrogen group.

4. A method for producing the resin modifier according to any one of claims 1 to 3, comprising singly heating a polymer containing a monomer unit having an epoxy group to 220°C or more.

5. A resin composition comprising the resin modifier according to claim 1 or 2 and a resin having an active hydrogen group.
